(19) Europäisches Patentamt
European Patent Office
Office européen des brevets

(11) **EP 3 896 501 B1**

(12) **EUROPEAN PATENT SPECIFICATION**

(45) Date of publication and mention of the grant of the patent:
**26.03.2025 Bulletin 2025/13**

(21) Application number: **19895338.2**

(22) Date of filing: **25.11.2019**

(51) International Patent Classification (IPC):
***G02B 5/30*** (2006.01) ***B32B 7/023*** (2019.01)
***B42D 25/22*** (2014.01) ***B42D 25/364*** (2014.01)
***G07D 7/00*** (2016.01) ***G07D 7/121*** (2016.01)
***G07D 7/128*** (2016.01) ***B42D 25/351*** (2014.01)
***B42D 25/391*** (2014.01)

(52) Cooperative Patent Classification (CPC):
**B42D 25/351; B42D 25/364; B42D 25/391; G02B 5/3016; G07D 7/003; G07D 7/128;**
G02B 5/3083

(86) International application number:
**PCT/JP2019/045942**

(87) International publication number:
**WO 2020/121791 (18.06.2020 Gazette 2020/25)**

(54) **AUTHENTICITY DETERMINING VIEWER AND MANUFACTURING METHOD FOR SAME, METHOD FOR DETERMINING AUTHENTICITY OF AUTHENTICATION MEDIUM, AND AUTHENTICITY DETERMINING SET**

AUTHENTIZITÄTSBESTIMMUNGSBETRACHTER UND HERSTELLUNGSVERFAHREN DAFÜR, VERFAHREN ZUR BESTIMMUNG DER AUTHENTIZITÄT EINES AUTHENTIFIZIERUNGSMEDIUMS UND AUTHENTIZITÄTBESTIMMUNGSSET

VISIONNEUSE DE DÉTERMINATION D'AUTHENTICITÉ ET SON PROCÉDÉ DE FABRICATION, PROCÉDÉ POUR DÉTERMINER L'AUTHENTICITÉ D'UN SUPPORT D'AUTHENTIFICATION ET ENSEMBLE DE DÉTERMINATION D'AUTHENTICITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2018 JP 2018231846**

(43) Date of publication of application:
**20.10.2021 Bulletin 2021/42**

(73) Proprietor: **Zeon Corporation**
**Tokyo 100-8246 (JP)**

(72) Inventor: **FUJINO, Yasuhide**
**Tokyo 100-8246 (JP)**

(74) Representative: **Maiwald GmbH**
**Elisenhof**
**Elisenstraße 3**
**80335 München (DE)**

(56) References cited:
**JP-A- 2001 002 797**
**JP-A- 2008 068 599**
**JP-A- 2008 129 421**
**JP-A- 2008 203 557**
**JP-A- 2008 203 557**
**JP-A- 2012 177 842**
**JP-A- 2013 068 868**
**JP-A- 2016 010 857**
**JP-A- 2016 010 857**
**US-A1- 2010 026 450**
**US-A1- 2013 257 032**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 896 501 B1

## Description

### Field

The present invention relates to a viewer for authenticity determination and a method for producing the same, a method for determining authenticity of an identification medium using this viewer, and a set for authenticity determination.

### Background

For authenticity determination to determine whether an article is an authentic product supplied from a registered manufacturer, an identification medium which cannot be easily reproduced is sometimes attached to the surface of an article. As one of materials used for such an identification medium, a material having cholesteric regularity (hereinafter, sometimes appropriately referred to as a "cholesteric material") is known.

A cholesteric material usually has a circularly polarized light separation function. The "circularly polarized light separation function" refers to a function of allowing one of clockwise circularly polarized light and counterclockwise circularly polarized light to pass therethrough and of reflecting a part or the entirety of the other. Reflection of the circularly polarized light by a cholesteric material take place with the chirality thereof being maintained.

Accordingly, the identification medium containing such a cholesteric material gives different images appearing when observed through a clockwise circular polarizing plate and when observed through a counterclockwise circular polarizing plate. Therefore, the difference between the images can be used for authenticity determination (see Patent Literatures 1 and 2). Patent Literatures 3 to 8 disclose other such identification media and authenticity determination tools.

### Citation List

### Patent Literature

Patent Literature 1: Japanese Patent Application Laid-Open No. 2007-279129 A
Patent Literature 2: Japanese Patent Application Laid-Open No. 2012-215762 A
Patent Literature 3: Japanese Patent Application Laid-Open No. 2016-010857 A
Patent Literature 4: Japanese Patent Application Laid-Open No. 2008-129421 A
Patent Literature 5: Japanese Patent Application Laid-Open No. 2013-068868 A
Patent Literature 6: US Patent Application Publication No. 2013/257032 A1
Patent Literature 7: Japanese Patent Application Laid-Open No. 2008-068599
Patent Literature 8: document JP 2008 203557 A

### Summary

### Technical Problem

In prior art techniques, observation for the aforementioned authenticity determination has been performed using a viewer that includes a clockwise circular polarizing plate and a counterclockwise circular polarizing plate. Specifically, a viewer including clockwise and counterclockwise circular polarizing plates in a separate manner like lenses for a pair of glasses has been generally used. However, the viewer separately including the clockwise and counterclockwise circular polarizing plates is large in size because it requires an area of two circular polarizing plates. Thus, such a viewer has room for improving in its ease of handling.

A prior-art circular polarizing plate used in viewers is generally produced by bonding a linear polarizer and a phase difference film together. One limitation for a circular polarizing plate made in this way is that the optical axes of the linear polarizer and the phase difference film are required to be adjusted when they are bonded together. Specifically, the directions of the transmission axis of the linear polarizer and the slow axis of the phase difference film are required to be adjusted to form a particular angle. Such a limitation tends to increase the difficulty level of the production of a circular polarizing plate. For example, in a method of producing a circular polarizing plate by bonding a long-length linear polarizer and a long-length phase difference film together via a roll-to-roll process, there are many elements to be controlled for achieving the adjustment of optical axes, and thus the producing method may be complicated.

The present invention has been made in view of the aforementioned problems, and has as its object to provide: a viewer which can be reduced in size and easily produced, and a method for producing the viewer; a method for determining authenticity of an identification medium using the viewer; and a set for authenticity determination including the viewer.

Solution to Problem

The present inventor intensively conducted research for solving the aforementioned problems. As a result, the present inventor has found that the aforementioned problems can be solved by a viewer which includes a polarized light separation layer containing a layer of a cholesteric material, and a phase difference layer disposed on one side of this polarized light separation layer. Thus, the present invention has been accomplished. That is, the present invention includes the following. The scope of the present invention is defined by the appended claims.

[1]. A viewer for authenticity determination comprising: a polarized light separation layer containing a layer of a cholesteric material; and a phase difference layer disposed on one side of the polarized light separation layer, the phase difference layer (120) having reverse wavelength dispersion property, wherein

the viewer is used for observing an identification medium containing a reflective material that contains a layer of a cholesteric material and a reflective material having that has a reflection wavelength region in which a reflectivity is 40% or more with respect to incident unpolarized light, and
the polarized light separation layer of the viewer has a reflection wavelength region in which a reflectivity is 40% or more with respect to incident unpolarized light, and
a part or all of the reflection wavelength region of the polarized light separation layer of the viewer and all of the reflection wavelength region of the reflective material of the identification medium overlap with each other.

[2] The viewer for authenticity determination according to [1], wherein the reflection wavelength region of the polarized light separation layer of the viewer and the reflection wavelength region of the reflective material of the identification medium overlap with each other in a wavelength width of 30 nm or more.
[3] The viewer for authenticity determination according to [1] to [2], wherein the reflection wavelength region of the polarized light separation layer of the viewer has a wavelength width of 70 nm or more.
[4] The viewer for authenticity determination according to any one of [1] to [3], wherein an in-plane retardation of the phase difference layer at a measurement wavelength of 590 nm is 240 nm or more and 320 nm or less.
[5] The viewer for authenticity determination according to any one of [1] to [4], comprising a support in which a light transmission portion capable of allowing light to pass therethrough is formed, wherein
the polarized light separation layer and the phase difference layer are disposed to the light transmission portion of the support.
[6] A method for determining authenticity of an identification medium that contains a reflective material containing a layer of a cholesteric material with the viewer for authenticity determination according to any one of [1] to [5], the method comprising:

a step of observing the identification medium through the viewer while the polarized light separation layer and the phase difference layer are disposed in this order from a side of the identification medium to obtain a first observation image;
a step of observing the identification medium through the viewer while the phase difference layer and the polarized light separation layer are disposed in this order from the side of the identification medium to obtain a second observation image; and
a step of determining authenticity of the identification medium on a basis of the first observation image and the second observation image.

[7] A method for producing the viewer for authenticity determination according to any one of [1] to [5], comprising bonding a polarized light separation layer and a phase difference layer together.
[8] A set for authenticity determination comprising: the viewer for authenticity determination according to any one of claims [1] to [5]; and an identification medium that contains a reflective material containing a layer of a cholesteric material.
[9] The set for authenticity determination according to [8], comprising an object of authenticity determination, wherein both the viewer and the identification medium are attached to the object.

Advantageous Effects of Invention

According to the present invention, there can be provided: a viewer which can be reduced in size and easily produced, and a method for producing the viewer; a method for determining authenticity of an identification medium using the viewer; and a set for authenticity determination including the viewer.

Brief Description of Drawings

FIG. 1 is a cross-sectional view schematically illustrating a viewer for authenticity determination according to an embodiment of the present invention.

FIG. 2 is a schematic view illustrating, with number lines, a relationship between a viewer reflection region λv of a polarized light separation layer and a medium reflection region λa of a reflective material in an example.

FIG. 3 is a schematic view illustrating, with number lines, a relationship between a viewer reflection region λv of a polarized light separation layer and a medium reflection region λa of a reflective material in another example.

FIG. 4 is a schematic view illustrating, with number lines, a relationship between a viewer reflection region λv of a polarized light separation layer and a medium reflection region λa of a reflective material in still another example.

FIG. 5 is a schematic view illustrating, with number lines, a relationship between a viewer reflection region λv of a polarized light separation layer and a medium reflection region λa of a reflective material in further another example.

FIG. 6 is a cross-sectional view schematically illustrating an article obtained by forming, on an object, an identification medium as a printed layer which contains a reflective material as a pigment containing a layer of a cholesteric material.

FIG. 7 is a cross-sectional view schematically illustrating an article obtained by forming, on an object, an identification medium as a printed layer which contains a reflective material as a pigment containing a layer of a cholesteric material.

FIG. 8 is a plane view schematically illustrating an example of a viewer including a support.

FIG. 9 is a plane view schematically illustrating an example of a viewer including a support.

FIG. 10 is a reflection spectrum diagram illustrating reflectivities of cholesteric material layers produced in Production Examples 1 to 4.

Description of Embodiments

Hereinafter, the present invention will be described in detail with reference to embodiments and examples. The present invention is not limited to the embodiments and examples described hereinafter. The scope of the invention is defined by the appended claims.

In the following description, an angle formed between optical axes (transmission axis, slow axis, etc.) of a linear polarizer and a phase difference layer represents an angle when it is viewed from the thickness direction thereof, unless otherwise specified.

In the following description, a "polarizing plate" and a "wave plate" include not only a rigid member but also a flexible member such as a resin film, unless otherwise specified.

In the following description, an in-plane retardation Re of a certain layer is a value represented by $Re = (nx - ny) \times d$ unless otherwise specified. Herein, nx represents a refractive index in a direction in which the maximum refractive index is given among directions (in-plane directions) perpendicular to the thickness direction of the layer, ny represents a refractive index in a direction, among the above-mentioned in-plane directions of the layer, perpendicular to the direction giving nx, and d represents the thickness of the layer.

In the following description, a direction of an element being "parallel", "perpendicular" or "orthogonal" may allow an error within the range of not impairing the advantageous effects of the present invention, for example, within a range of ±5° unless otherwise specified.

[1. Outline of viewer for authenticity determination]

FIG. 1 is a cross-sectional view schematically illustrating a viewer 100 for authenticity determination according to an embodiment of the present invention. As illustrated in FIG. 1, the viewer 100 for authenticity determination as an embodiment of the present invention includes a polarized light separation layer 110 and a phase difference layer 120 disposed on one side of this polarized light separation layer 110.

The phase difference layer 120 may be disposed on one side of the polarized light separation layer 110 either directly or indirectly. Herein, "directly" indicates that no other layer exists between the phase difference layer 120 and the polarized light separation layer 110. Also, "indirectly" indicates that another layer exists between the phase difference layer 120 and the polarized light separation layer 110.

[2. Polarized light separation layer]

The polarized light separation layer contains a layer of a cholesteric material. A cholesteric material is a material that contains molecules having cholesteric regularity. The cholesteric regularity is a structure in which the angle of molecular axes in stacking planes in the material are shifted (twisted) as the planes are observed sequentially passing

through the stacked planes, such that molecular axes in a certain first plane are oriented in a certain direction, molecular axes in a subsequent plane stacking on the first plane are oriented in a direction shifted by a small angle with respected to that of the first plane, and molecular axes in still another plane are oriented in a direction of a further shifted angle. That is, when molecules inside a layer of a certain material have cholesteric regularity, molecular axes of the molecules on a first plane inside the layer are aligned along a constant direction. On the subsequent second plane stacking on the first plane inside the layer, a direction of molecular axes is shifted by a slight angle from the direction of the molecular axes on the first plane. On the subsequent third plane further stacking on the second plane, a direction of molecular axes is further shifted by an angle from the direction of the molecular axes on the second plane. In this manner, on the planes disposed in a stacking manner, the angles of the molecular axes on these planes are sequentially shifted (twisted). The structure in which the directions of the molecular axes are twisted in this manner is usually a helical structure and is an optically chiral structure.

A layer of a cholesteric material generally has a circularly polarized light separation function. That is, this layer can allow one of clockwise circularly polarized light and counterclockwise circularly polarized light to pass therethrough and reflect a part or the entirety of the other. Reflection of the circularly polarized light by the layer of the cholesteric material take place with the chirality thereof being maintained. Hereinafter, a wavelength range in which the aforementioned circularly polarized light separation function is exerted may be referred to as a "reflection wavelength region".

Since the polarized light separation layer contains the layer of the cholesteric material, the polarized light separation layer has the aforementioned circularly polarized light separation function. Therefore, the polarized light separation layer of the viewer has a reflection wavelength region. From the viewpoint of clarifying a difference between images observed at the time of authenticity determination to facilitate the determination, the polarized light separation layer preferably has a high reflectivity in the reflection wavelength region. Specifically, the polarized light separation layer has a reflection wavelength region in which a reflectivity is 40% or more with respect to incident unpolarized light. In the following description, a reflection wavelength region in which the polarized light separation layer has a reflectivity of 40% or more with respect to incident unpolarized light may be referred to as a "viewer reflection region".

A wavelength at which a layer of a cholesteric material exerts a circularly polarized light separation function generally depends on the pitch of the helical structure in the layer of the cholesteric material. The pitch of the helical structure is a distance in a plane normal direction, from the start of gradual shifting of the direction of molecular axes with an angle in the helical structure as proceeding through planes, to the return to the original direction of molecular axes. This pitch of the helical structure can be adjusted to control a wavelength at which a circularly polarized light separation function is exerted. Therefore, the viewer reflection region of the polarized light separation layer containing the layer of the cholesteric material can be adjusted by adjusting the pitch of the helical structure of a cholesteric material contained in the polarized light separation layer. An example of a method for adjusting the pitch may include a method disclosed in Japanese Patent Application Laid-Open No. 2009-300662 A. A specific example thereof may include a method of adjusting the type or amount of a chiral agent in a cholesteric liquid crystal composition. In particular, when the pitch of the helical structure continuously varies within a layer, a single layer of a cholesteric material can provide a circularly polarized light separation function over a wide range of wavelength.

Since the viewer is used for observing an identification medium, the specific viewer reflection region of the polarized light separation layer is preferably set depending on the reflection wavelength region of a reflective material contained in the identification medium. Hereinafter, this point will be described in detail.

Since the reflective material of the identification medium contains the layer of the cholesteric material, the reflective material generally has a reflection wavelength region in which a circularly polarized light separation function can be exerted. From the viewpoint of clarifying a difference between images observed at the time of authenticity determination to facilitate the determination, the reflective material is often formed such that a high reflectivity is achieved in the reflection wavelength region. Therefore, the reflective material can have a reflection wavelength region in which a reflectivity is 40% or more with respect to incident unpolarized light. In the following description, a reflection wavelength region in which a reflective material of an identification medium has a reflectivity of 40% or more with respect to incident unpolarized light may be referred to as a "medium reflection region". In this case, the viewer reflection region of the polarized light separation layer preferably at least partly overlaps the medium reflection region of the reflective material. Therefore, a minimum wavelength $\lambda vmin$ of a viewer reflection region $\lambda v$, a maximum wavelength $\lambda vmax$ of the viewer reflection region $\lambda v$, a minimum wavelength $\lambda amin$ of a medium reflection region $\lambda a$, and a maximum wavelength $\lambda amax$ of a medium reflection region $\lambda a$ preferably satisfy the following formulae (1) and (2).

$$\lambda amin \le \lambda vmax \quad (1)$$

$$\lambda vmin \le \lambda amax \quad (2)$$

The wavelength width (hereinafter, sometimes appropriately referred to as an "overlapping wavelength width") of

a wavelength range in which the viewer reflection region of the polarized light separation layer and the medium reflection region of the reflective material overlap with each other preferably has a particular size. Specifically, the overlapping wavelength width is preferably 30 nm or more and more preferably 50 nm or more. When the overlapping wavelength width is equal to or more than the lower limit value, a difference between images observed at the time of authenticity determination can be clarified to facilitate the determination of authenticity. The upper limit of the overlapping wavelength width can be, but not particularly limited to, for example, 400 nm.

FIG. 2 is a schematic view illustrating, with number lines, the relationship between the viewer reflection region λv of the polarized light separation layer and the medium reflection region λa of the reflective material in an example. In the example illustrated in FIG. 2, the minimum wavelength λvmin of the viewer reflection region λv of the polarized light separation layer is larger than the minimum wavelength λamin of the medium reflection region λa of the reflective material (that is, $\lambda amin < \lambda vmin$); and the maximum wavelength λvmax of the viewer reflection region λv of the polarized light separation layer is smaller than the maximum wavelength λamax of the medium reflection region λa of the reflective material (that is, $\lambda vmax < \lambda amax$). In this example, the overlapping wavelength width λw is usually expressed by λvmax - λvmin. Therefore, in a case of this example, λvmax - λvmin preferably has the aforementioned particular size.

FIG. 3 is a schematic view illustrating, with number lines, the relationship between the viewer reflection region λv of the polarized light separation layer and the medium reflection region λa of the reflective material in another example. In the example illustrated in FIG. 3, the minimum wavelength λvmin of the viewer reflection region λv of the polarized light separation layer is equal to or smaller than the minimum wavelength λamin of the medium reflection region λa of the reflective material (that is, $\lambda vmin \leq \lambda amin$); and the maximum wavelength λvmax of the viewer reflection region λv of the polarized light separation layer is equal to or larger than the minimum wavelength λamin and smaller than the maximum wavelength λamax of the medium reflection region λa of the reflective material (that is, $\lambda amin \leq \lambda vmax < \lambda amax$). In this example, the overlapping wavelength width λw is usually expressed by λvmax - λamin. Therefore, in a case of this example, λvmax - λamin preferably has the aforementioned particular size.

FIG. 4 is a schematic view illustrating, with number lines, the relationship between the viewer reflection region λv of the polarized light separation layer and the medium reflection region λa of the reflective material in still another example. In the example illustrated in FIG. 4, the minimum wavelength λvmin of the viewer reflection region λv of the polarized light separation layer is equal to or smaller than the minimum wavelength λamin of the medium reflection region λa of the reflective material (that is $\lambda vmin \leq \lambda amin$); and the maximum wavelength λvmax of the viewer reflection region λv of the polarized light separation layer is equal to or larger than the maximum wavelength λamax of the medium reflection region λa of the reflective material (that is, $\lambda amax \leq \lambda vmax$). In this example, the overlapping wavelength width λw is usually expressed by λamax - λamin. Therefore, in a case of this example, λamax - λamin preferably has the aforementioned particular size.

FIG. 5 is a schematic view illustrating, with number lines, the relationship between the viewer reflection region λv of the polarized light separation layer and the medium reflection region λa of the reflective material in still another example. In the example shown in FIG. 5, the minimum wavelength λvmin of the viewer reflection region λv of the polarized light separation layer is larger than the minimum wavelength λamin of the medium reflection region λa of the reflective material and is equal to or smaller than the maximum wavelength λamax (that is, $\lambda amin < \lambda vmin \leq \lambda amax$); and the maximum wavelength λvmax of the viewer reflection region λv of the polarized light separation layer is equal to or larger than the maximum wavelength λamax of the medium reflection region λa of the reflective material (that is, $\lambda amax \leq \lambda vmax$). In this example, the overlapping wavelength width λw is usually expressed by λamax - λvmin. Therefore, in a case of this example, λamax - λvmin preferably has the aforementioned particular size.

Among the aforementioned examples, as illustrated in FIG. 4, a part or all of the viewer reflection region λv of the polarized light separation layer, and all of the medium reflection region λa of the reflective material preferably overlap with each other. Therefore, a minimum wavelength λvmin of a viewer reflection region λv, a maximum wavelength λvmax of the viewer reflection region λv, a minimum wavelength λvmin of a medium reflection region λa, and a maximum wavelength λamax of a medium reflection region λa preferably satisfy the following formulas (3) and (4). In this case, a difference between the images observed at the time of authenticity determination can be particularly clarified.

$$\lambda vmin \leq \lambda amin \quad (3)$$

$$\lambda amax \leq \lambda vmax \quad (4)$$

The width of the viewer reflection region of the polarized light separation layer is preferably 70 nm or more, more preferably 100 nm or more, further preferably 200 nm or more, and particularly preferably 300 nm or more. A viewer including a polarized light separation layer having a wide viewer reflection region can accommodate a wide range of a medium reflection region. Thus the flexibility of the color of the reflective material can be enhanced. Therefore, such a viewer can be used for a variety of identification media for authenticity determination. Furthermore, a viewer including a

polarized light separation layer having a wide viewer reflection region can clarify a difference between images observed at the time of authenticity determination. The upper limit of the width of the viewer reflection region of the polarized light separation layer may be, but not particularly limited to, for example, 600 nm or less.

The viewer reflection region of the polarized light separation layer can be found by measuring the reflectivity when unpolarized light enters the polarized light separation layer, using a ultraviolet-visible spectrophotometer ("UV-Vis 550" manufactured by JASCO Corporation).

Examples of the polarized light separation layer having a wide viewer reflection region as described above may include (i) a layer including the layer of the cholesteric material in which the size of the pitch of the helical structure is changed in a stepwise manner, and (ii) a layer including the layer of the cholesteric material in which the size of the pitch of the helical structure is changed continuously.

(i) The layer including the layer of the cholesteric material in which the pitch of the helical structure is changed in a stepwise manner can be obtained by, for example, stacking a plurality of layers of the cholesteric material having different pitches of the helical structure. After a plurality of cholesteric material layers having different pitches of the helical structure have been produced in advance, stacking can be performed by bonding together the layers via a tackiness agent or an adhesive. The stacking may be performed by forming a layer of a cholesteric material and then sequentially forming a layer of another cholesteric material thereon.

(ii) The layer including the layer of the cholesteric material in which the size of the pitch of the helical structure is continuously changed can be obtained **by,** for example, subjecting the layer of the liquid crystal composition to a band broadening treatment including one or more times of irradiation treatment with active energy rays and/or warming treatment, followed by curing the layer of the liquid crystal composition. The aforementioned band broadening treatment can continuously change the pitch of the helical structure in the thickness direction, so that the reflection wavelength region of the layer of the cholesteric material can be expanded, which is thus referred to as a band broadening treatment.

The layer of the cholesteric material included in the polarized light separation layer may be one layer or two or more layers. The number of the layers of a cholesteric material included in the polarized light separation layer is preferably 1 to 100, and more preferably 1 to 20 from the viewpoint of facilitating the production.

The layer of the cholesteric material may be obtained by, for example, a method involving providing a layer of a cholesteric liquid crystal composition on a suitable substrate, and curing the layer to obtain the layer of the cholesteric material. For convenience, a material referred to as a "liquid crystal composition" encompasses not only a mixture of two or more substances but also a material consisting only of a single substance. The cholesteric liquid crystal composition refers to a composition capable of exhibiting a liquid crystal phase (cholesteric liquid crystal phase) in which a liquid crystal compound has cholesteric regularity when a liquid crystal compound contained in the liquid crystal composition is oriented.

As the cholesteric liquid crystal composition, a liquid crystal composition containing a liquid crystal compound and further containing an optional component, as necessary, can be used. Examples of the liquid crystal compounds may include a liquid crystal compound which is a macromolecular compound, and a polymerizable liquid crystal compound. In order to obtain a high thermal stability, a polymerizable liquid crystal compound is preferably used. When the polymerizable liquid crystal compound is polymerized in a state where the cholesteric regularity is exhibited, a layer of the cholesteric liquid crystal composition can be cured to obtain the layer of the non-liquid crystal cholesteric material that has been cured while exhibiting cholesteric regularity. As the cholesteric liquid crystal composition, for example, those described in International Publication No. 2016/002765 can be used.

As the substrate, an optional member having a flat support surface capable of supporting the layer of the cholesteric liquid crystal composition can be used. As such a substrate, a resin film is usually used. Further, in order to promote the orientation of the liquid crystal compound in the layer of the cholesteric liquid crystal composition, the support surface of the substrate may be subjected to a treatment for imparting an orientation regulating force. Herein, the orientation regulating force of a certain surface refers to the property of the surface that can orient the liquid crystal compound in the cholesteric liquid crystal composition. Examples of the foregoing treatments for imparting an orientation regulating force to the support surface may include a rubbing treatment, an orientation film forming treatment, a stretching treatment, and an ion beam orientation treatment.

Usually, a cholesteric liquid crystal composition is applied onto a support surface of a substrate to provide the layer of the cholesteric liquid crystal composition. Examples of the applying methods may include a curtain coating method, an extrusion coating method, a roll coating method, a spin coating method, a dip coating method, a bar coating method, a spray coating method, a slide coating method, a print coating method, a gravure coating method, a die coating method, a gap coating method, and a dipping method.

After the layer of the cholesteric liquid crystal composition is provided, the layer of the cholesteric liquid crystal composition may be subjected to an orientation treatment, if necessary. The orientation treatment is usually performed by warming the layer of the cholesteric liquid crystal composition to a particular orientation temperature. By performing such

an orientation treatment, a liquid crystal compound contained in the cholesteric liquid crystal composition is oriented to obtain a state in which cholesteric regularity is exhibited. The orientation temperatures are specifically adjusted depending on the composition of the cholesteric liquid crystal composition, and may range, for example, from 50°C to 150°C. The treatment time of the orientation treatment may be, for example, from 0.5 minutes to 10 minutes.

The orientation of the liquid crystal compound contained in the cholesteric liquid crystal composition may be achieved immediately by applying the cholesteric liquid crystal composition. Therefore, the orientation treatment may not necessarily be applied to the layer of the cholesteric liquid crystal composition.

After the liquid crystal compound has been oriented, the layer of the cholesteric liquid crystal composition is cured to obtain the layer of the cholesteric material. In this step, polymerizable components such as a polymerizable liquid crystal compound contained in the cholesteric liquid crystal composition is usually polymerized to cure the layer of the cholesteric liquid crystal composition. As the polymerization method, a method adapted to the properties of the components contained in the cholesteric liquid crystal composition may be selected. Examples of the polymerization method may include a method of irradiating active energy rays, and a thermal polymerization method. Among these, a method of irradiating active energy rays is preferable because the polymerization reaction is allowed to proceed at room temperature. Herein, the active energy rays to be irradiated may include light such as visible light, ultraviolet light, and infrared light, and optional energy rays such as an electron beam. When the layer of the cholesteric liquid crystal composition is cured by irradiation of active energy rays, the intensity of the active energy rays irradiated may be, for example, 50 mJ/cm$^2$ to 10,000 mJ/cm$^2$.

Furthermore, after the liquid crystal compound has been oriented and before the layer of the cholesteric liquid crystal composition is cured, the layer of the cholesteric liquid crystal composition may be subjected to a band broadening treatment. Such a band broadening treatment can be performed by, for example, a combination of an active energy ray irradiation treatment and a warming treatment both performed once or more. The irradiation treatment in the band broadening treatment can be performed by, for example, irradiating with light having a wavelength of 200 nm to 500 nm for 0.01 second to 3 minutes. In the irradiation treatment, the energy of irradiation light may be, for example, 0.01 mJ/cm$^2$ to 50 mJ/cm$^2$. The heating treatment can be performed by heating to a temperature of, for example, preferably 40°C or higher and more preferably 50°C or higher, and preferably 200°C or lower and more preferably 140°C or lower. In this heating treatment, the heating time may be preferably 1 second or more, and more preferably 5 seconds or more, and usually 3 minutes or less, and preferably 120 seconds or less. When such a band broadening treatment is performed, the size of the pitch of the helical structure can be continuously changed in a significant manner to obtain a wide reflection wavelength region.

The aforementioned irradiation with active energy ray may be performed in the air. The step may be partly or entirely performed in an atmosphere in which the oxygen concentration is controlled (for example, under a nitrogen atmosphere).

The aforementioned step of applying and curing the cholesteric liquid crystal composition is not limited to once, and the applying and curing may be repeated a plurality of times. Accordingly, a thick cholesteric material layer containing two or more layers is obtained.

In the aforementioned production method, the twist direction of cholesteric regularity can be appropriately selected depending on the structure of a used chiral agent. For example, when the twist is to be in the clockwise direction, a cholesteric liquid crystal composition containing a chiral agent that imparts dextrorotation is used. When the twist direction is to be the counterclockwise direction, a cholesteric liquid crystal composition containing a chiral agent that imparts levorotation is used.

As the layer of the cholesteric material, those described in, for example, Japanese Patent Application Laid-Open No. 2014-174471 A, and Japanese Patent Application Laid-Open No. 2015-27743 A may be referred to.

The polarized light separation layer may include an optional layer in combination with the layer of the cholesteric material described above. Examples of the optional layers may include a tackiness agent layer and an adhesive layer for bonding the layers of the cholesteric material together.

The thickness of the polarized light separation layer is preferably 2 μm or more, and more preferably 3 μm or more, and is preferably 1000 μm or less, and more preferably 500 μm or less. When the thickness of the polarized light separation layer is equal to or more than the lower limit value of the aforementioned range, the reflectivity of the polarized light separation layer can be increased, so that the difference in the image observed at the time of the authenticity determination can be particularly clarified. On the other hand, when the thickness of the polarized light separation layer is equal to or less than the upper limit value of the aforementioned range, transparency of the viewer can be enhanced.

[3. Phase difference layer]

The phase difference layer is a layer which is disposed on one side of the polarized light separation layer and has an in-plane retardation having a particular range. The range of the in-plane retardation of the phase difference layer is preferably set such that the polarization state of circularly polarized light reflected by the reflective material of the identification medium can be changed to a degree that authenticity determination is possible in wavelengths of light used in

authenticity determination. The aforementioned "wavelengths of light used in authenticity determination" specifically denotes wavelengths of the medium reflection region of the reflective material contained in an identification medium to be observed through the viewer.

Among these, the specific in-plane retardation of the phase difference layer is preferably set so that the phase difference layer can function as a half-wave plate in the medium reflection region of the reflective material included in the identification medium. As to the preferable specific ranges, the in-plane retardation of the phase difference layer at the center wavelength $\lambda c = (\lambda amax + \lambda amin)/2$ of the medium reflection region is preferably ($\lambda c/2$ - 50 nm) or more and ($\lambda c/2$ + 50 nm) or less, more preferably ($\lambda c/2$ - 30 nm) or more and ($\lambda c/2$ + 30 nm) or less, and further preferably ($\lambda c/2$ - 20 nm) or more and ($\lambda c/2$ + 20 nm) or less.

In a particularly preferable embodiment, the in-plane retardation of the phase difference layer at a measurement wavelength of 590 nm is preferably 240 nm or more, and more preferably 250 nm or more, and is preferably 320 nm or less, and more preferably 300 nm or less. A phase difference layer having an in-plane retardation falling within the range described above at a measurement wavelength of 590 nm is usually capable of functioning as a half-wave plate in the visible wavelength region. Use of such a phase difference layer can easily achieve a viewer that can be used in the visible wavelength range.

The phase difference layer preferably has a reverse wavelength dispersion property. Herein, the reverse wavelength dispersion property means that the in-plane retardation Re(450) and Re(560) at the measurement wavelengths of 450 nm and 560 nm, respectively, satisfy the following formula (5).

$$Re(450) < Re(560) \quad (5)$$

A phase difference layer with a reverse wavelength dispersion property can exert its optical function in a wide wavelength range. Therefore, use of the phase difference layer with a reverse wavelength dispersion property can achieve a viewer that can be used in a wide wavelength range.

The phase difference layer usually has a slow axis in the in-plane direction of the phase difference layer. There is no limitation in the slow axis direction of the phase difference layer. It is possible to determine the authenticity of the identification medium even when the slow axis of the phase difference layer is in any direction.

As the phase difference layer, for example, a stretched film may be used. A stretched film is a film obtained by stretching a resin film, and an optional in-plane retardation can be obtained by appropriately adjusting elements such as the types of resin, the stretching conditions, and the thickness.

As the resin, a thermoplastic resin is usually used. This thermoplastic resin may contain a polymer and, if necessary, an optional component. Examples of the polymer may include polycarbonate, polyether sulfone, polyethylene terephthalate, polyimide, polymethyl methacrylate, polysulfone, polyarylate, polyethylene, polyphenylene ether, polystyrene, polyvinyl chloride, cellulose diacetate, cellulose triacetate, and an alicyclic structure-containing polymer. As the polymer, one type thereof may be solely used, and two or more types thereof may be used in combination at any ratio. Among these, an alicyclic structure-containing polymer is suitable from the viewpoint of transparency, low hygroscopicity, size stability, and processability. The alicyclic structure-containing polymer is a polymer having an alicyclic structure in a main chain and/or a side chain, and, for example, those described in Japanese Patent Application Laid-Open No. 2007-057971 A can be used.

A stretched film as a phase difference layer can be produced by producing a resin film from the resin described above and then subjecting the resin film to a stretching treatment.

Examples of the method for producing a resin film may include a cast molding method, an inflation molding method, and an extrusion molding method, among which an extrusion molding method is preferable.

The stretching treatment can be performed by, for example, a roll method, a float method, or a tenter method. The stretching treatment may be a stretching (lateral stretching) in the width direction of the resin film, a stretching (longitudinal stretching) in the length direction, a stretching in an oblique direction which is neither the width direction nor the length direction, or a combination thereof.

The stretching temperature and the stretching ratio may be optionally set within a range in which a desired in-plane retardation can be obtained. As to the specific ranges, the stretching temperature is preferably equal to or higher than Tg - 30°C, and more preferably equal to or higher than Tg - 10°C, and is preferably equal to or lower than Tg + 60°C, and more preferably equal to or lower than Tg + 50°C. The stretching ratio is preferably 1.1 times or more, more preferably 1.2 times or more, and particularly preferably 1.5 times or more, and is preferably 30 times or less, more preferably 10 times or less, and particularly preferably 5 times or less. Herein, Tg represents a glass transition temperature of a resin.

The thickness of the stretched film is not particularly limited, and is preferably 5 μm or more, more preferably 10 μm or more, and particularly preferably 20 μm or more, and is preferably 1 mm or less, more preferably 500 μm or less, and particularly preferably 200 μm or less.

As the phase difference layer, for example, a liquid crystal cured layer can be used. A liquid crystal cured layer is a layer formed of a cured product of a liquid crystal composition containing a liquid crystal compound. Usually, a liquid crystal

cured layer is obtained by forming a layer of a liquid crystal composition, orienting molecules of the liquid crystal compound contained in the layer of the liquid crystal composition, and then curing the layer of the liquid crystal composition. In this liquid crystal cured layer, an optional in-plane retardation can be obtained by appropriately adjusting elements such as the type of the liquid crystal compound, the orientation state of the liquid crystal compound, and the thickness.

Although the type of the liquid crystal compound is freely selected, it is preferable to use a liquid crystal compound with a reverse wavelength dispersion property when it is preferable to obtain a phase difference layer with a reverse wavelength dispersion property. The liquid crystal compound with a reverse wavelength dispersion property means a liquid crystal compound which exhibits a reverse wavelength dispersion property when homogeneously oriented. The homogeneous orientation of a liquid crystal compound means that a layer containing the liquid crystal compound is formed, and a direction giving the maximum refractive index in the refractive index ellipsoid of the molecule of the liquid crystal compound in the layer is oriented in one direction parallel to the surface of the layer. Specific examples of the liquid crystal compound with a reverse wavelength dispersion property may include compounds described in, for example, International Publication No. 2014/069515 and International Publication No. 2015/064581.

The thickness of the liquid crystal cured layer is not particularly limited, and is preferably 0.5 μm or more, and more preferably 1.0 μm or more, and is preferably 10 μm or less, more preferably 7 μm or less, and particularly preferably 5 μm or less.

[4. Method for determining authenticity of identification medium using viewer]

With the aforementioned viewer according to an embodiment, it is possible to choose one of clockwise circularly polarized light and counterclockwise circularly polarized light as the circularly polarized light to be blocked in the viewer by selecting the direction of the light passing through the viewer. Therefore, authenticity of an identification medium that contains a reflective material containing a layer of a cholesteric material can be determined by using this viewer. Authenticity of an identification medium is usually determined by a method including: a step of observing an identification medium through the viewer while the polarized light separation layer and the phase difference layer are disposed in this order from the identification medium side to obtain a first observation image; a step of observing the identification medium through the viewer while the phase difference layer and the polarized light separation layer are disposed in this order from the identification medium side to obtain a second observation image; and a step of determining the authenticity of the identification medium on the basis of the first observation image and the second observation image. Herein, "observation through the viewer" includes observation through both the polarized light separation layer and the phase difference layer of the viewer. Hereinafter, such a method for determining authenticity of an identification medium will be described by illustrating examples.

FIG. 6 and FIG. 7 are each a cross-sectional view schematically illustrating an article 200 obtained by forming, on an object 210, an identification medium 230 as a printed layer which contains a reflective material 220 as a pigment containing the layer of the cholesteric material. Although various absorptions and reflections of light may occur other than those described below in an actual article, the main path of light will be schematically described in the following description for convenience of the explanation of operations. FIG. 6 and FIG. 7 illustrate an example in which a phase difference layer 120 of a viewer 100 functions as a half-wave plate.

In the method illustrated in this example, the viewer 100 is placed over the identification medium 230 of the article 200, and the identification medium 230 is observed through the viewer 100, as illustrated in FIG. 6 and FIG. 7. Usually, a plurality of such observations are carried out while changing the front-rear direction of the viewer 100. Specifically, the observation is performed in the orientation of the following (i) and the orientation of the following (ii).

(i) An orientation in which light L passes through the polarized light separation layer 110 and the phase difference layer 120 in this order and then enters the identification medium 230, as illustrated in FIG. 6.
(ii) An orientation in which light L passes through the phase difference layer 120 and the polarized light separation layer 110 in this order and then enters the identification medium 230, as illustrated in FIG. 7.

When such observation is performed, circularly polarized light in light L irradiating the viewer 100 is partly (specifically, circularly polarized light in the viewer reflection region) is reflected, and the remainder passes through the polarized light separation layer 110 and the phase difference layer 120 to become transmitted light $L_T$. In the observation in one orientation of the aforementioned (i) and (ii), the transmitted light $L_T$ may contain light $L_R$ which can be reflected by the reflective material 220 contained in the identification medium 230. Therefore, the light $L_R$ can be reflected by the reflective material 220 of the identification medium 230 and pass through the polarized light separation layer 110 and the phase difference layer 120 again to be visually recognized. Herein, the reflection may occur not only on the surface of the reflective material 220 but also inside the reflective material 220. However, in FIG. 6, the reflection is schematically illustrated as occurring on the surface of the reflective material 220. Accordingly, an image displayed by the reflective material 220 appears in the visually recognized observation image. On the other hand, in the observation in the other

orientation of the aforementioned (i) and (ii), the transmitted light $L_T$ does not contain light $L_R$ which can be reflected by the reflective material 220. Therefore, the reflection of the transmitted light $L_T$ by the reflective material 220 does not occur. Accordingly, an image displayed by the reflective material 220 does not appear in the visually recognized observation image. Thus, according to this observation, an observation image observed in the orientation of the aforementioned (i) and an observation image observed in the orientation of (ii) differ from each other. Therefore, when the aforementioned difference between the observation images is obtained through the observation with the viewer 100, it can be determined that the identification medium 230 is authentic and that the article 200 containing the identification medium 230 is also authentic. When this difference between observation images is not obtained, it can be determined that the article is non-authentic.

As another example, the identification medium 230 may be observed through the viewer 100 while the identification medium 230 is irradiated with light containing light $L_R$ which can be reflected by the reflective material 220. When a plurality of such observations are carried out while changing the front-rear directions of the viewer 100, authenticity determination can also be performed on the basis of the observed observation images in the same manner as described above. Specifically, observation may be performed in the orientation of the following (iii) and the orientation of the following (iv).

(iii) An orientation in which reflection light $L_R$ from the reflective material 220 passes through the polarized light separation layer 110 and the phase difference layer 120 in this order.
(iv) An orientation in which reflection light $L_R$ from the reflective material 220 passes through the phase difference layer 120 and the polarized light separation layer 110 in this order.

In such observation, according to an observation in one orientation of the aforementioned (iii) and (iv), reflection light $L_R$ from the reflective material 220 can pass through the polarized light separation layer 110 and the phase difference layer 120, and therefore, an image displayed by the reflective material 220 appears in the visually recognized observation image. On the other hand, according to an observation in the other orientation of the aforementioned (iii) and (iv), reflection light $L_R$ from the reflective material 220 is blocked by the polarized light separation layer 110 and the phase difference layer 120, and therefore, an image displayed by the reflective material 220 does not appear in the visually recognized observation image. Thus, according to this observation, an observation image observed in the orientation of the aforementioned (iii) and an observation image observed in the orientation of (iv) differ from each other. Therefore, when the aforementioned difference between the observation images is obtained through the observation with the viewer 100, it can be determined that the identification medium 230 is authentic and that the article 200 containing the identification medium 230 is also authentic. When such a difference between observation images is not obtained, it can be determined that the article is non-authentic.

In the aforementioned description, the viewer 100 capable of allowing to pass therethrough or blocking the entirety of light $L_R$ which can be reflected by the reflective material 220 has been illustrated as an example. However, the viewer 100 capable of allowing to pass therethrou or blocking a part of light $L_R$ which can be reflected by the reflective material 220 can be used to determine authenticity as long as such authenticity determination is possible.

As previously described, with the viewer 100 according to the present embodiment, it is possible to choose one of clockwise circularly polarized light and counterclockwise circularly polarized light as the circularly polarized light to be blocked by selecting the front-rear direction. Accordingly, unlike a prior-art viewer which separately includes a clockwise circular polarizing plate and a counterclockwise circular polarizing plate, the viewer 100 is usable with an area for one circular polarizing plate and therefore can be reduced in size. Furthermore, since the size can be reduced, the handling property can be improved.

In the present embodiment, blocking of clockwise circularly polarized light and blocking of counterclockwise circularly polarized light are not performed by separate circular polarizing plates like prior art techniques but by a common viewer. Therefore, it is difficult to tamper with a viewer such that a non-authentic article appears authentic, and the reliability of authenticity determination can be enhanced.

[5. Method for producing viewer]

The viewer according to the present embodiment can be produced by, for example, a production method including bonding a polarized light separation layer and a phase difference layer together. Since the orientation of the slow axis of the phase difference layer in the viewer is optional, the optical axis does not need to be adjusted between the polarized light separation layer and the phase difference layer in the aforementioned bonding. Therefore, the viewer according to the present embodiment can be easily produced.

The advantage of not needing to adjust the optical axes is especially useful when the polarized light separation layer and the phase difference layer are bonded together via a roll-to-roll process. In general, bonding in a roll-to roll process is carried out by bonding long-length films together, thus the degree of difficulty in adjusting the optical axes is high.

In contrast to this, regarding to the viewer of the present embodiment, since the optical axes do not need to be adjusted, a long-length polarized light separation layer and a long-length phase difference layer can be bonded together simply by allowing their long-length directions to coincide with each other. Thus, the elements to be controlled in bonding are reduced, thereby simplifying the production method.

[6. Optional member]

Although an embodiment of the present invention has been described, the present invention may be modified from the aforementioned embodiment for implementation.

For example, the viewer may include, other than the circularly polarized light separation layer and the phase difference layer, an optional element. Examples of the optional element may include a tackiness agent layer, an adhesive agent layer, and a hardcoat layer.

Furthermore, the viewer may include, as an optional element, for example, a support to support the circularly polarized light separation layer and the phase difference layer. FIG. 8 and FIG. 9 are each a plane view schematically illustrating an example of a viewer 300 including a support 330. FIG. 8 illustrates a state when one side of the viewer 300 is seen, and FIG. 9 illustrates a state when a side opposite to the one side of the viewer 300 is seen.

As illustrated in FIG. 8 and FIG. 9, the viewer 300 may include, as an optional component, the support 330. Usually, a light transmission portion 340 capable of allowing light to pass therethrough is formed in the support 330, and the polarized light separation layer 110 and the phase difference layer 120 are disposed to this light transmission portion 340. FIG. 8 and FIG. 9 illustrate an example of the viewer 300 including, as the support 330, a plate-shape member in which a window-shape opening is formed as the light transmission portion 340. As such a plate-shape member, a member containing an optional material such as resin, wood, paper, and metal may be used. Since the viewer 300 including the support 330 can be handled while the support 330 is gripped, scratches on the polarized light separation layer 110 and the phase difference layer 120 can be suppressed.

On the support 330, a description regarding the viewer 300 may be displayed. For example, a description on how an identification medium appears through the viewer 300 may be displayed on the support 330. As a specific example, a first description (for example, a describing section 350 with a figure, and a describing section 360 with a letter), which indicates that an image formed by reflection light by a reflective material contained in an identification medium can be visually recognized, may be displayed on a part of the support 330, as illustrated in FIG. 8. This first description may be displayed on one side of the support 330. Furthermore, a second description (for example, a describing section 370 with a figure, and a describing section 380 with a letter), which indicates that an image formed by reflection light by a reflective material contained in an identification medium cannot be visually recognized, may be displayed on another part of the support 330, as illustrated in FIG. 9. This second description may be displayed on the other side of the support 330. When the support 330 displaying such a description is adopted, a user can easily understand how to use the viewer 300.

Furthermore, for example, the viewer may include, as an optional element, a furniture for fixing the viewer to an optional article. Examples of the furniture may include a string, a pin, and a clip. A method for disposing a furniture to the viewer is optional. For example, a furniture may be disposed by bonding to the polarized light separation layer, the phase difference layer, or the support. For example, a furniture may be disposed by stapling to the polarized light separation layer, the phase difference layer, or the support. For example, a furniture may be disposed by forming a hole to the polarized light separation layer, the phase difference layer, or the support and drawing a furniture such as a string through this hole. With such a furniture, the viewer can be fixed to an object to which an identification medium is formed. Therefore, a combination of an object and a viewer can be sold, which can promote the distribution of a viewer in the market.

[7. Identification medium]

The identification medium observed through the viewer includes a reflective material. The reflective material includes the layer of the cholesteric material. Since the reflective material includes the layer of the cholesteric material, it may have a circularly polarized light separation function. The reflective material preferably has a reflection wavelength region in which unpolarized light can be reflected at a high reflectivity. In particular, the reflective material preferably has a medium reflection region as a reflection wavelength region in which unpolarized light can be reflected at a reflectivity of 40% or more. The specific range and wavelength width of the medium reflection region are optional, and may be optionally set depending on the design of the identification medium.

The form of the identification medium is optional.

For example, the identification medium may be the layer itself of the reflective material. Such an identification medium can be disposed, on the surface of an article, as a layer of a reflective material having a desired planar shape.

For example, the identification medium may be a layer of a composition containing a particulate reflective material. Such an identification medium can be disposed by applying a liquid composition containing a particulate reflective material onto the surface of an article and then curing the composition. A specific example thereof may include

preparing a paint containing a particulate reflective material as a pigment and using this paint to print a marking as an identification medium on an article. The particulate reflective material may be produced by, for example, a method disclosed in Japanese Patent Application Laid-Open No. 2015-27743 A.

For example, the identification medium may include an appropriate sheet and a layer of a reflective material or a layer of a composition containing a reflective material formed on this sheet. Specific examples of such an identification medium may include labels and stickers.

An article as an object to which the identification medium is to be attached is not limited, and a variety of articles can be adopted. Examples of these articles may include, but are not limited to, cloth products such as clothing; leather products such as bags and shoes; metal products such as screws; paper products such as price tags; rubber products such as tires; plastic containers for food; glass containers for food; plastic containers for medicine; and glass containers for medicine.

[8. Set for authenticity determination]

The aforementioned identification medium and viewer may be combined as a set for authenticity determination. Since the identification medium and viewer can be appropriately combined to perform the method for determining authenticity as previously described, it is preferable to produce, distribute, and use a set in which the identification medium and viewer are appropriately combined.

For example, both the viewer and the identification medium may be attached to an object of authenticity determination. In this case, the set for authenticity determination includes the object, the viewer, and the identification medium. A specific example thereof may be a set including an object such as clothing and a bag, an identification medium sewn as a woven label on the object, and a viewer attached like a price tag to the object. Another specific example may be a set including an object, and an identification medium and a viewer each attached like a price tag to this object. As still another specific example, when an object of authenticity determination is placed in a box, a viewer may exist inside the box or fixed outside the box.

Examples

Hereinafter, the present invention will be specifically described by illustrating Examples. However, the present invention is not limited to the Examples described below. The present invention may be optionally modified for implementation without departing from the scope of claims of the present invention .

In the following description, "%" and "part" representing quantity are on the basis of weight, unless otherwise specified. The operation described below was performed under the conditions of normal temperature and normal pressure in the atmosphere, unless otherwise specified.

[Method for measuring reflectivity of cholesteric material layer]

A substrate film was removed from a multilayer film to obtain a cholesteric material layer. The reflectivity, when unpolarized light (wavelength 400 nm to 800 nm) entered this cholesteric material layer, was measured using a ultraviolet-visible spectrophotometer ("UV-Vis 550" manufactured by JASCO Corporation).

[Method for measuring in-plane retardation]

The in-plane retardation was measured using a phase difference meter ("Axoscan" manufactured by Axometrics Inc.).

[Production Example 1: Production of broadband cholesteric material layer]

A photopolymerizable liquid crystal compound represented by the following formula (X1), a photopolymerizable non-liquid crystal compound represented by the following formula (X2), a chiral agent ("LC756" manufactured by BASF Co., Ltd.), a photopolymerization initiator ("Irgacure OXEO2" manufactured by Ciba Japan Co., Ltd.), a surfactant ("Futergent 209F" manufactured by Neos Corporation), and cyclopentanone as a solvent were mixed in amounts shown in the following Table 1 to prepare a liquid crystal composition.

[Chemical Formula 1]

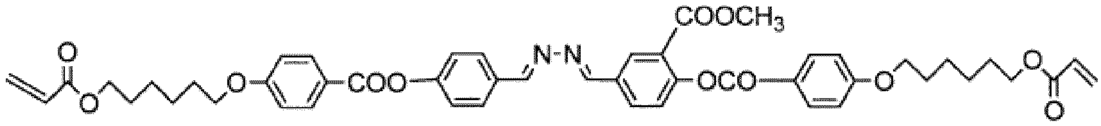

(X1)

[Chemical Formula 2]

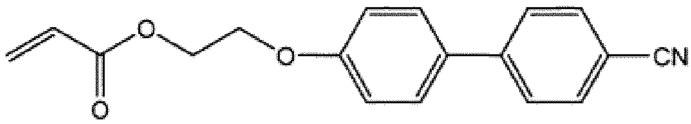

(X2)

As a substrate film, a long-length polyethylene terephthalate film ("A4100" manufactured by Toyobo Co., Ltd.; thickness 100 μm) having an isotropic in-plane refractive index was prepared. This substrate film was mounted on a feeding area of a film conveyor. While the substrate film was conveyed in the long-length direction, the following operation was performed.

The surface of the substrate film was subjected to a rubbing treatment in a long-length direction that is parallel to the conveyance direction. Next, onto the rubbing treated surface of the substrate film, the liquid crystal composition was applied using a die coater to form a layer of the liquid crystal composition. This layer of the liquid crystal composition was subjected to an orientation treatment of heating at 120°C for 4 minutes. After that, the layer of the liquid crystal composition was subjected to a band broadening treatment. This band broadening treatment involved a primary ultraviolet irradiation treatment of irradiating the layer of the liquid crystal composition with ultraviolet light at 5 $mJ/cm^2$ for 1 minute, a primary warming treatment of warming the layer of the liquid crystal composition to 100°C for 1 minute, a secondary ultraviolet irradiation treatment of irradiating the layer of the liquid crystal composition with ultraviolet light at 30 $mJ/cm^2$ for 1 minute, and a secondary warming treatment of warming to 100°C for 1 minute, in this order. After that, the layer of the liquid crystal composition was irradiated with ultraviolet light at 800 $mJ/cm^2$ to cure the layer of the liquid crystal composition. Accordingly, a multilayer film including the substrate film and a cholesteric material layer was obtained. The reflectivity of the cholesteric material layer of this multilayer film was measured by the aforementioned method. The measurement results of reflectivity are illustrated in FIG. 10.

[Production Examples 2 to 4: Production of blue, green, and red cholesteric material layers]

The amounts of the liquid crystal compound, the non-liquid crystal compound, the chiral agent, the photopolymerization initiator, the surfactant, and the solvent were changed as shown in the following Table 1. The band broadening treatment was not performed. Except for these matters, the same operation as that of Production Example 1 was performed to produce a multilayer film including a cholesteric material layer and to measure the reflectivity of the cholesteric material layer of the multilayer film. The measurement results of reflectivity are illustrated in FIG. 10.

[Table 1]

| [Table 1. Manufacturing Conditions of Cholesteric Material Layer] | | | | | |
|---|---|---|---|---|---|
| Production Example | | 1 | 2 | 3 | 4 |
| type of cholesteric material layer | | broadband | blue | green | red |
| liquid crystal compound (part) | | 21.9 | 21.5 | 21.8 | 22 |
| non-liquid crystal compound (part) | | 5.47 | 5.38 | 5.46 | 5.51 |
| chiral agent (part) | | 1.69 | 2.13 | 1.755 | 1.49 |
| photopolymerization initiator (part) | | 0.9 | 0.9 | 0.9 | 0.9 |
| surfactant (part) | | 0.03 | 0.03 | 0.03 | 0.03 |
| cyclopentanone (part) | | 70 | 70 | 70 | 70 |
| orientation treatment | temperature (°C) | 120 | 120 | 120 | 120 |
| | time (minute) | 4 | 4 | 4 | 4 |

(continued)

| [Table 1. Manufacturing Conditions of Cholesteric Material Layer] | | | | | | |
|---|---|---|---|---|---|---|
| Production Example | | 1 | 2 | 3 | 4 |
| primary UV irradiation treatment | intensity (mJ/cm$^2$) | 5 | | | |
| | time(minute) | 1 | | | |
| primary warming treatment | temperature (°C) | 100 | | | |
| | time (minute) | 1 | | | |
| secondary UV irradiation treatment | intensity (mJ/cm$^2$) | 30 | | | |
| | time (minute) | 1 | | | |
| secondary warming treatment | temperature (°C) | 100 | | | |
| | time (minute) | 1 | | | |
| UV irradiation treatment for curing enough (mJ/cm$^2$) | | 800 | 800 | 800 | 800 |
| thickness of cholesteric material layer (μm) | | 5.2 | 3 | 3 | 3 |

[Production Examples 5 to 7: Production of phase difference film]

There was prepared a resin film ("ZEONOR film" manufactured by ZEON Corporation; film produced by extrusion molding; unstretched product) containing a norbornene-based polymer as an alicyclic structure-containing polymer. This resin film was stretched in one direction at a stretching temperature of 130°C with the stretching ratio shown in Table 2 to obtain a phase difference film having the in-plane retardation Re and the thickness shown in the following Table 2.

[Table 2]

| [Table 2. Manufacturing Conditions of Phase Difference Film] | | | |
|---|---|---|---|
| | stretching ratio | thickness (μm) | in-plane retardation at measurement wavelength of 590nm |
| Production Example 5 | 3.0 | 50 | 140nm |
| Production Example 6 | 3.5 | 43 | 200nm |
| Production Example 7 | 4.0 | 37 | 290nm |

[Production Example 8: Production of phase difference layer with reverse wavelength dispersion property]

A liquid crystal composition was prepared by the same operation as that of Example 3 in Japanese Patent No. 6055569 B. That is, into a mixed solvent of 30 parts of 1,3-dioxolane and 200 parts of cyclopentanone, 99 parts of a liquid crystal compound represented by the following formula (X3), 1 part of a liquid crystal compounds represented by the following formula (X4), 3 parts of a photopolymerization initiator ("Irgacure OXE02" manufactured by BASF Co., Ltd.), and 10 parts of a 1% cyclopentanone solution of a surfactant ("Futargent 208G" manufactured by Neos corporation) were dissolved. This solution was filtered through a disposable filter having a pore diameter of 0.45 μm to obtain a liquid crystal composition.

[Chemical Formula 3]

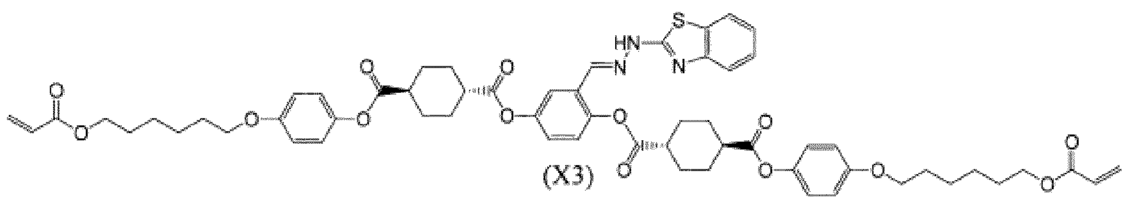

(X3)

[Chemical Formula 4]

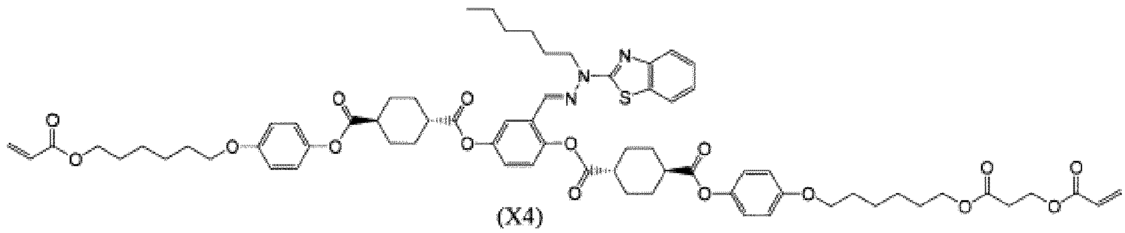

(X4)

As a substrate film, a polyethylene terephthalate film was prepared. The surface of this substrate film was subjected to a rubbing treatment. After that, onto the rubbing treated surface of the substrate film, the liquid crystal composition was applied using a die coater to form a layer of the liquid crystal composition. This layer of the liquid crystal composition was subjected to an orientation treatment of heated at 110°C for 4 minutes. After that, the layer of the liquid crystal composition was irradiated with ultraviolet light at 500 $mJ/cm^2$ to cure the layer of the liquid crystal composition. Accordingly, there was obtained a multilayer phase difference film having a substrate film and a phase difference layer (thickness: 4.92 μm, in-plane retardation at a measurement wavelength of 590 nm: 290 nm).

For the obtained phase difference layer, the in-plane retardations Re(450) and Re(560) at measurement wavelengths of 450 nm and 560 nm were measured. The result satisfied Re(450) < Re(560). As confirmed from this result, the phase difference layer produced in Production Example 8 has a reverse wavelength dispersion property.

[Example 1]

(Production of viewer)

The cholesteric material layer of the multilayer film produced in Production Example 1 and the phase difference film produced in Production Example 6 were bonded together through a tackiness agent. As the tackiness agent, there was used a "LUCIACS CS9621T" transparent tackiness tape manufactured by Nitto Denko Corporation (thickness: 25 μm, visible light transmittance: 90% or more, in-plane retardation: 3 nm or less). After that, the substrate film of the multilayer film was removed to obtain a viewer having the layer configuration of cholesteric material layer (polarized light separation layer) / tackiness agent / phase difference film.

(Production of identification medium)

The cholesteric material layer was peeled from the multilayer film produced in Production Example 3 and pulverized to obtain a cholesteric pigment as a flake-shape reflective material. Ten parts of this cholesteric pigment was mixed with 85 parts of a screen ink ("No. 2500 medium" manufactured by Jujo Chemical Co., Ltd.) and 5 parts of a diluent (Tetron standard solvent) exclusive for the screen ink to obtain a paint. With this paint, letters were printed on a black sheet and dried to form a letter layer. Accordingly, there was obtained an identification medium including the black sheet and the letter layer which is formed on the black sheet and contains the cholesteric pigment.

(Determination of authenticity)

The viewer was placed over the identification medium. Then, the identification medium was observed through the viewer to obtain a first observation image.

After that, the viewer was turned over. This viewer that had been turned over was placed over the identification medium again. Then, the identification medium was observed through the viewer to obtain a second observation image.

The aforementioned observation was performed by five subjects. From the observation results of these five subjects, determination at three levels was performed in accordance with the following criteria.

"Excellent": All of five subjects answered that "The first observation image is invisible." and "The second observation image is visible."

"Good": All of five subjects answered that "The first observation image appears magenta color." and "The second observation image appears silver color."

"Fair": Three subjects answered that "The first observation image is visible.", and two subjects answered that "The first observation image is invisible." All of five subjects answered that "The second observation image is visible." Three subjects who answered that "The first observation image is visible" answered that a difference in appearance between the first observation image and the second observation image is seen.

[Example 2]

In the abovementioned step of (Production of identification medium), a flake-shape cholesteric pigment, which was produced by pulverizing the cholesteric material layer peeled from the multilayer film produced in Production Example 1, was used instead of the cholesteric pigment produced from the cholesteric material layer of the multilayer film produced in Production Example 3.

In the same manner as that of Example 1 except for the aforementioned matter, a viewer and an identification medium were produced and authenticity was determined.

[Example 3]

In the abovementioned step of (Production of viewer), the phase difference film produced in Production Example 7 was used instead of the phase difference film produced in Production Example 6.

In the same manner as that of Example 1 except for the aforementioned matter, a viewer and an identification medium were produced and authenticity was determined

[Example 4]

In the abovementioned step of (Production of viewer), the phase difference film produced in Production Example 7 was used instead of the phase difference film produced in Production Example 6.

In the abovementioned step of (Production of identification medium), a flake-shape cholesteric pigment, which was produced by pulverizing the cholesteric material layer peeled from the multilayer film produced in Production Example 1, was used instead of the cholesteric pigment produced from the cholesteric material layer of the multilayer film produced in Production Example 3.

In the same manner as that of Example 1 except for the aforementioned matters, a viewer and an identification medium were produced and authenticity was determined.

[Example 5]

In the abovementioned step of (Production of viewer), the phase difference film produced in Production Example 7 was used instead of the phase difference film produced in Production Example 6.

In the abovementioned step of (Production of identification medium), a cholesteric material layer peeled from the multilayer film produced in Production Example 2 was pulverized to obtain a flake-shape cholesteric pigment, and a cholesteric material layer peeled from the multilayer film produced in Production Example 4 was pulverized to obtain a flake-shape cholesteric pigment. These flake-shape cholesteric pigments were used in combination instead of the cholesteric pigment produced from the cholesteric material layer of the multilayer film produced in Production Example 3.

In the same manner as that of Example 1 except for the aforementioned matters, a viewer and an identification medium were produced and authenticity was determined.

[Example 6]

The cholesteric material layer of the multilayer film produced in Production Example 1 and the phase difference layer of the multilayer phase difference film produced in Production Example 8 were bonded together using the abovementioned tackiness agent. After that, the substrate film of the multilayer film and the substrate film of the multilayer phase difference film were removed to obtain a viewer having the layer configuration of cholesteric material layer (polarized light separation layer) / tackiness agent / phase difference layer. This viewer was used instead of the viewer produced in Example 1.

In the abovementioned step of (Production of identification medium), a flake-shape cholesteric pigment, which was produced by pulverizing the cholesteric material layer peeled from the multilayer film produced in Production Example 1, was used instead of the cholesteric pigment produced from the cholesteric material layer of the multilayer film produced in Production Example 3.

In the same manner as that of Example 1 except for the aforementioned matters, an identification medium was produced and authenticity was determined.

[Example 7]

In the abovementioned step of (Production of viewer), the cholesteric material layer of the multilayer film produced in Production Example 3 was used instead of the cholesteric material layer of the multilayer film produced in

Production Example 1. In the abovementioned step of (Production of viewer), the phase difference film produced in Production Example 7 was used instead of the phase difference film produced in Production Example 6.

In the abovementioned step of (Production of identification medium), a flake-shape cholesteric pigment, which was produced by pulverizing the cholesteric material layer peeled from the multilayer film produced in Production Example 1, was used instead of the cholesteric pigment produced from the cholesteric material layer of the multilayer film produced in Production Example 3.

In the same manner as that of Example 1 except for the aforementioned matters, a viewer and an identification medium were produced and authenticity was determined.

[Comparative Example 1]

To one surface of a linear polarizer, the phase difference film produced in Production Example 5 was bonded through the aforementioned tackiness agent. This bonding was performed such that the transmission axis of the linear polarizer and the slow axis of the phase difference film formed an angle of 45°. Furthermore, to the other surface of the linear polarizer, the phase difference film produced in Production Example 5 was bonded through the aforementioned tackiness agent. This bonding was performed such that the slow axis of the firstly bonded phase difference film and the slow axis of the secondly bonded phase difference film are in parallel. Accordingly, there was obtained a viewer having the layer configuration of phase difference film / tackiness agent / linear polarizer / tackiness agent / phase difference film. This viewer was used instead of the viewer produced in Example 1.

Furthermore, in the aforementioned step of (Production of identification medium), a flake-shape cholesteric pigment, which was produced by pulverizing the cholesteric material layer peeled from the multilayer film produced in Production Example 1, was used instead of the cholesteric pigment produced from the cholesteric material layer of the multilayer film produced in Production Example 3.

In the same manner as that of Example 1 except for the aforementioned matters, an identification medium was produced and authenticity was determined.

[Results]

The results of Examples and Comparative Examples are shown in the following Table 3 and Table 4. In the following Tables, the abbreviations mean as follows.

CLC layer: cholesteric material layer
$\lambda$vmin: minimum wavelength of the viewer reflection region of the polarized light separation layer of the viewer
$\lambda$vmax: maximum wavelength of the viewer reflection region of the polarized light separation layer of the viewer
Re: in-plane retardation of the phase difference layer of the polarized light separation layer at a measurement wavelength of 590 nm
$\lambda$amin: minimum wavelength of the medium reflection region of the reflective material of the identification medium
$\lambda$amax: maximum wavelength of the medium reflection region of the reflective material of the identification medium

[Table 3]

| [Table 3. Results of Examples 1 to 5] | | | | | |
|---|---|---|---|---|---|
| | Example 1 | Example 2 | Example 3 | Example 4 | Example 5 |
| viewer configuration | CLC layer + phase difference layer | CLC layer + phase difference layer | CLC layer + phase difference layer | CLC layer + phase difference layer | CLC layer + phase difference layer |
| number of bonding | 1 time | 1 time | 1 time | 1 time | 1 time |
| adjustment of optical axes | unnecessary | unnecessary | unnecessary | unnecessary | unnecessary |
| viewer | | | | | |

(continued)

| [Table 3. Results of Examples 1 to 5] | | | | | | |
|---|---|---|---|---|---|---|
| | | Example 1 | Example 2 | Example 3 | Example 4 | Example 5 |
| polarized light separation layer (CLC layer) | Production Example | Production Ex. 1 | Production Ex. 1 | Production Ex. 1 | Production Ex. 1 | Production Ex. 1 |
| | type | broadband | broadband | broadband | broadband | broadband |
| | λvmin | 405nm | 405nm | 405nm | 405nm | 405nm |
| | λvmax | 765nm | 765nm | 765nm | 765nm | 765nm |
| phase difference layer | Production Example | Production Ex. 6 | Production Ex. 6 | Production Ex. 7 | Production Ex. 7 | Production Ex. 7 |
| | Re | 200nm | 200nm | 290nm | 290nm | 290nm |
| identification medium | | | | | | |
| CLC layer (1) | Production Example | Production Ex. 3 | Production Ex. 1 | Production Ex. 3 | Production Ex. 1 | Production Ex. 2 |
| | type | narrow band (green) | broadband | narrow band (green) | broadband | narrow band (blue) |
| | λamin | 510nm | 405nm | 510nm | 405nm | 415nm |
| | λamax | 600nm | 765nm | 600nm | 765nm | 490nm |
| CLC layer (2) | Production Example | - | - | - | - | Production Ex. 4 |
| | type | - | - | - | - | narrow band (red) |
| | λamin | - | - | - | - | 605nm |
| | λamax | - | - | - | - | 710nm |
| first observation image | | approximately invisible | approximately invisible | invisible | invisible | invisible |
| second observation image | | visible | visible | visible | visible | visible |
| difference of observation images | | exist | exist | exist | exist | exist |
| easiness of determination of authenticity | | Fair | Fair | Excellent | Excellent | Excellent |

[Table 4]

| [Table 4. Results of Examples 6 and 7 and Comparative Example 1] | | | |
|---|---|---|---|
| | Example 6 | Example 7 | Comparative Example 1 |
| viewer configuration | CLC layer + phase difference layer | CLC layer + phase difference layer | phase difference layer + linear polarizer + phase difference layer |
| number of bonding | 1 time | 1 time | 2 times |
| adjustment of optical axes | unnecessary | unnecessary | necessary (transmission axis of linear polarizer and slow axis of phase difference film form an angle of 45°) |
| viewer | | | |

(continued)

| [Table 4. Results of Examples 6 and 7 and Comparative Example 1] | | | | |
|---|---|---|---|---|
| | | Example 6 | Example 7 | Comparative Example 1 |
| polarized light separation layer (CLC layer) | Production Example | Production Ex. 1 | Production Ex. 3 | - |
| | type | broadband | narrow band (green) | - |
| | λvmin | 405nm | 510nm | - |
| | λvmax | 765nm | 600nm | - |
| phase difference layer | Production Example | Production Ex. 8 | Production Ex. 7 | Production Ex. 5 |
| | Re | 290nm (reverse wavelength dispersion) | 290nm | 140nm |
| identification medium | | | | |
| CLC layer (1) | Production Example | Production Ex. 1 | Production Ex. 1 | Production Ex. 1 |
| | type | broadband | broadband | broadband |
| | λamin | 405nm | 405nm | 405nm |
| | λamax | 765nm | 765nm | 765nm |
| CLC layer (2) | Production Example | - | - | - |
| | type | - | - | - |
| | λamin | - | - | - |
| | λamax | - | - | - |
| first observation image | | invisible | visible | invisible |
| second observation image | | visible | visible | visible |
| difference of observation images | | exist | exist (colors of observation images are different each other) | exist |
| easiness of determination of authenticity | | Excellent | Good | Excellent |

Reference Sign List

100 viewer
110 polarized light separation layer
120 phase difference layer
200 article
210 object
220 reflective material
230 identification medium
300 viewer
330 support
340 light transmission portion
350 describing section with a figure
360 describing section with a letter

370 describing section with a figure
380 describing section with a letter

**Claims**

1. A viewer (100, 300) for authenticity determination comprising: a polarized light separation layer (110) containing a layer of a cholesteric material; and a phase difference layer (120) disposed on one side of the polarized light separation layer (110), the phase difference layer (120) having reverse wavelength dispersion property, wherein

   the viewer (100, 300) is used for observing an identification medium (230) containing a reflective material (220) that contains a layer of a cholesteric material and that has a reflection wavelength region in which a reflectivity is 40% or more with respect to incident unpolarized light, and
   the polarized light separation layer (110) of the viewer (100, 300) has a reflection wavelength region in which a reflectivity is 40% or more with respect to incident unpolarized light, and
   a part or all of the reflection wavelength region of the polarized light separation layer (110) of the viewer (100, 300) and all of the reflection wavelength region of the reflective material (220) of the identification medium (230) overlap with each other.

2. The viewer (100, 300) for authenticity determination according to claim 1, wherein the reflection wavelength region of the polarized light separation layer (110) of the viewer (100, 300) and the reflection wavelength region of the reflective material (220) of the identification medium (230) overlap with each other in a wavelength width of 30 nm or more.

3. The viewer (100, 300) for authenticity determination according to claim 1 or 2, wherein the reflection wavelength region of the polarized light separation layer (110) of the viewer (100, 300) has a wavelength width of 70 nm or more.

4. The viewer (100, 300) for authenticity determination according to any one of claims 1 to 3, wherein an in-plane retardation of the phase difference layer (120) at a measurement wavelength of 590 nm is 240 nm or more and 320 nm or less.

5. The viewer (100, 300) for authenticity determination according to any one of claims 1 to 4, comprising a support (330) in which a light transmission portion (340) capable of allowing light to pass therethrough is formed, wherein
   the polarized light separation layer (110) and the phase difference layer ( 120) are disposed to the light transmission portion (340) of the support (330).

6. A method for determining authenticity of an identification medium (230) that contains a reflective material (220) containing a layer of a cholesteric material with the viewer (100, 300) for authenticity determination according to any one of claims 1 to 5, the method comprising:

   a step of observing the identification medium (230) through the viewer (100, 300) while the polarized light separation layer (110) and the phase difference layer (120) are disposed in this order from a side of the identification medium (230) to obtain a first observation image;
   a step of observing the identification medium (230) through the viewer (100, 300) while the phase difference layer (120)and the polarized light separation layer (110) are disposed in this order from the side of the identification medium (230) to obtain a second observation image; and
   a step of determining authenticity of the identification medium (230) on a basis of the first observation image and the second observation image.

7. A method for producing the viewer (100, 300) for authenticity determination according to any one of claims 1 to 5, comprising bonding a polarized light separation layer (110) and a phase difference layer (120) together.

8. A set for authenticity determination comprising: the viewer (100, 300) for authenticity determination according to any one of claims 1 to 5; and an identification medium (230) that contains a reflective material (220) containing a layer of a cholesteric material.

9. The set for authenticity determination according to claim 8, comprising an object of authenticity determination, wherein
   both the viewer (100, 300) and the identification medium (230) are attached to the object.

**Patentansprüche**

1. Betrachter (100, 300) zur Authentizitätsbestimmung, umfassend: eine Trennschicht für polarisiertes Licht(110), die eine Schicht aus einem cholesterischen Material enthält; und eine Phasendifferenzschicht (120), die auf einer Seite der Trennschicht für polarisiertes Licht(110) angeordnet ist, wobei die Phasendifferenzschicht (120) eine umgekehrte Wellenlängendispersionseigenschaft aufweist, wobei

    der Betrachter (100, 300) zum Beobachten eines Identifikationsmediums (230) verwendet wird das ein reflektierendes Material (220) enthält, welches eine Schicht aus einem cholesterischen Material enthält und das einen Reflexionswellenlängenbereich aufweist, in dem ein Reflexionsvermögen 40% oder mehr in Bezug auf einfallendes unpolarisiertes Licht beträgt, und
    die Trennschicht für polarisiertes Licht (110) des Betrachters (100, 300) einen Reflexionswellenlängenbereich aufweist, in dem das Reflexionsvermögen 40% oder mehr in Bezug auf einfallendes unpolarisiertes Licht beträgt, und
    ein Teil oder der gesamte Reflexionswellenlängenbereich der Trennschicht für polarisiertes Licht (110) des Betrachters (100, 300) und der gesamte Reflexionswellenlängenbereich des reflektierenden Materials (220) des Identifikationsmediums (230) einander überlappen.

2. Betrachter (100, 300) zur Authentizitätsbestimmung nach Anspruch 1, wobei sich der Reflexionswellenlängenbereich der Trennschicht für polarisiertes Licht (110) des Betrachters (100, 300) und der Reflexionswellenlängenbereich des reflektierenden Materials (220) des Identifikationsmediums (230) in einer Wellenlängenbreite von 30 nm oder mehr überlappen.

3. Betrachter (100, 300) zur Authentizitätsbestimmung nach Anspruch 1 oder 2, wobei der Reflexionswellenlängenbereich der Trennschicht für polarisiertes Licht (110) des Betrachters (100, 300) eine Wellenlängenbreite von 70 nm oder mehr aufweist.

4. Betrachter (100, 300) zur Authentizitätsbestimmung nach einem der Ansprüche 1 bis 3, wobei eine in der Ebene liegende Verzögerung der Phasendifferenzschicht (120) bei einer Messwellenlänge von 590 nm 240 nm oder mehr und 320 nm oder weniger beträgt.

5. Betrachter (100, 300) zur Authentizitätsbestimmung nach einem der Ansprüche 1 bis 4, mit einem Träger (330), in dem ein lichtdurchlässiger Abschnitt (340) ausgebildet ist, der Licht hindurchlassen kann, wobei
die Trennschicht für polarisiertes Licht (110) und die Phasendifferenzschicht (120) an dem lichtdurchlässigen Abschnitt (340) des Trägers (330) angeordnet sind.

6. Verfahren zur Authentizitätsbestimmung eines Identifikationsmediums (230) das ein reflektierendes Material (220) enthält, welches eine Schicht aus einem cholesterischen Material mit dem Betrachter (100, 300) zur Authentizitätsbestimmung nach einem der Ansprüche 1 bis 5 enthält, wobei das Verfahren umfasst:

    einen Schritt des Beobachtens des Identifikationsmediums (230) durch den Betrachter (100, 300), während die Trennschicht für polarisiertes Licht (110) und die Phasendifferenzschicht (120) in dieser Reihenfolge von einer Seite des Identifikationsmediums (230) aus angeordnet sind, um ein erstes Beobachtungsbild zu erhalten;
    einen Schritt des Beobachtens des Identifikationsmediums (230) durch den Betrachter (100, 300), während die Phasendifferenzschicht (120) und die Trennschicht für polarisiertes Licht (110) in dieser Reihenfolge von der Seite des Identifikationsmediums (230) angeordnet sind, um ein zweites Beobachtungsbild zu erhalten; und
    einen Schritt der Bestimmung der Authentizität des Identifikationsmediums (230) auf der Grundlage des ersten Beobachtungsbildes und des zweiten Beobachtungsbildes.

7. Verfahren zur Herstellung des Betrachters (100, 300) zur Authentizitätsbestimmung nach einem der Ansprüche 1 bis 5, bei dem eine Trennschicht für polarisiertes Licht (110) und eine Phasendifferenzschicht (120) miteinander verbunden werden.

8. Set zur Authentizitätsbestimmung, umfassend: den Betrachter (100, 300) zur Authentizitätsbestimmung nach einem der Ansprüche 1 bis 5; und ein Identifikationsmedium (230), das ein reflektierendes Material (220) enthält welches eine Schicht aus einem cholesterischen Material enthält.

9. Set zur Authentizitätsbestimmung nach Anspruch 8, umfassend ein Objekt der Authentizitätsbestimmung, wobei

sowohl der Betrachter (100, 300) als auch das Identifikationsmedium (230) am Objekt befestigt sind.

**Revendications**

1. Visionneuse (100, 300) de détermination d'authenticité comprenant : une couche de séparation de lumière polarisée (110) contenant une couche d'un matériau cholestérique ; et une couche de différence de phase (120) disposée sur un côté de la couche de séparation de la couche polarisée (110), la couche de différence de phase (120) ayant une propriété de dispersion en longueur d'onde inversée,
dans laquelle

   la visionneuse (100, 300) est utilisée pour observer un moyen d'identification (230) contenant un matériau réfléchissant (220) qui contient une couche d'un matériau cholestérique et qui a une région de longueur d'onde de réflexion dans laquelle une réflectivité est de 40 % ou plus par rapport à la lumière non polarisée incidente, et la couche de séparation de lumière polarisée (110) de la visionneuse (100, 300) a une région de longueur d'onde de réflexion dans laquelle une réflectivité est de 40 % ou plus par rapport à la lumière non polarisée incidente, et une partie ou la totalité de la région de longueur d'onde de réflexion de la couche de séparation de lumière polarisée (110) de la visionneuse (100, 300) et la totalité de la région de longueur d'onde de réflexion du matériau réfléchissant (220) du moyen d'identification (230) se chevauchent.

2. Visionneuse (100, 300) de détermination d'authenticité selon la revendication 1, dans laquelle la région de longueur d'onde de réflexion de la couche de séparation de lumière polarisée (110) de la visionneuse (100, 300) et la région de longueur d'onde de réflexion du matériau réfléchissant (220) du moyen d'identification (230) se chevauchent dans une largeur de longueur d'onde de 30 nm ou plus.

3. Visionneuse (100, 300) de détermination d'authenticité selon la revendication 1 ou 2, dans laquelle la région de longueur d'onde de réflexion de la couche de séparation de lumière polarisée (110) de la visionneuse (100, 300) a une largeur de longueur d'onde de 70 nm ou plus.

4. Visionneuse (100, 300) de détermination d'authenticité selon l'une quelconque des revendications 1 à 3, dans laquelle un retard dans le plan de la couche de différence de phase (120) à une longueur d'onde de mesure de 590 nm est de 240 nm ou plus et de 320 nm ou moins.

5. Visionneuse (100, 300) de détermination d'authenticité selon l'une quelconque des revendications 1 à 4, comprenant un support (330) dans lequel une section de transmission de lumière (340) apte à permettre à la lumière de passer à travers est formée, dans laquelle
la couche de séparation de lumière polarisée (110) et la couche de différence de phase (120) sont disposées sur la section de transmission de lumière (340) du support (330).

6. Procédé de détermination d'authenticité d'un moyen d'identification (230) qui contient un matériau réfléchissant (220) contenant une couche d'un matériau cholestérique avec la visionneuse (100, 300) de détermination d'authenticité selon l'une quelconque des revendications 1 à 5, le procédé contenant :

   une étape d'observation du moyen d'identification (230) à travers la visionneuse (100, 300) alors que la couche de séparation de lumière polarisée (110) et la couche de différence de phase (120) sont disposées dans cet ordre à partir d'un côté du moyen d'identification (230) pour obtenir une première image d'observation ;
   une étape d'observation du moyen d'identification (230) à travers la visionneuse (100, 300) alors que la couche de différence de phase (120) et la couche de séparation de lumière polarisée (110) sont disposées dans cet ordre à partir du côté du moyen d'identification (230) pour obtenir une deuxième image d'observation ; et
   une étape de détermination d'authenticité du moyen d'identification (230) sur la base de la première image d'observation et de la deuxième image d'observation.

7. Procédé de production de la visionneuse (100, 300) de détermination d'authenticité selon l'une quelconque des revendications 1 à 5, comprenant l'assemblage d'une couche de séparation de lumière polarisée (110) et d'une couche de différence de phase (120).

8. Ensemble de détermination d'authenticité comprenant : la visionneuse (100, 300) de détermination d'authenticité selon l'une quelconque des revendications 1 à 5 ; et un moyen d'identification (230) qui contient un matériau

réfléchissant (220) contenant une couche d'un matériau cholestérique.

**9.** Ensemble de détermination d'authenticité selon la revendication 8, comprenant un objet de détermination d'authenticité, dans lequel
la visionneuse (100, 300) et le moyen d'identification (230) sont tous deux attachés à l'objet.

FIG.1

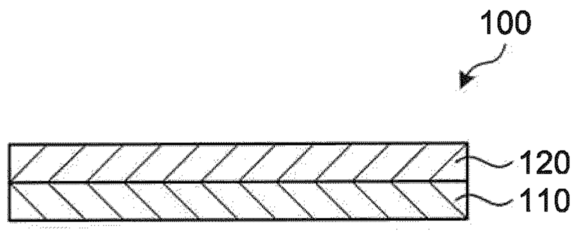


FIG.2

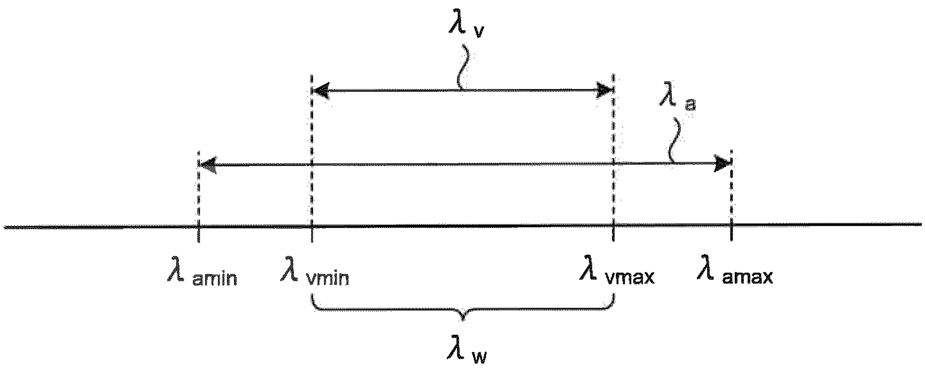

FIG.3

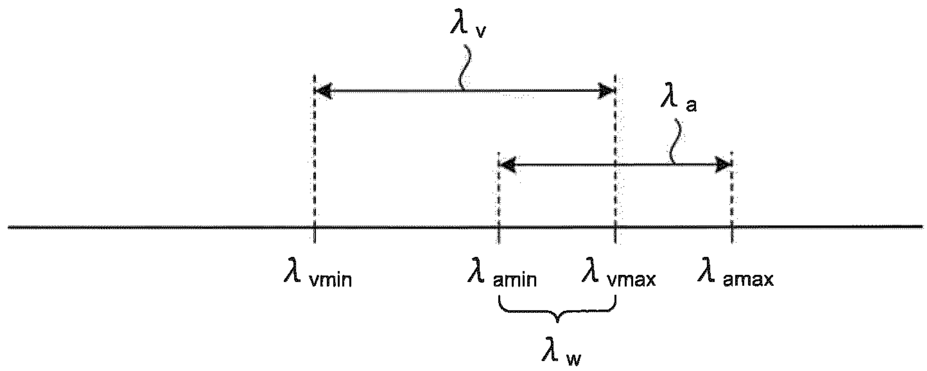
$\lambda_v$
$\lambda_a$
$\lambda_{vmin}$
$\lambda_{amin}$
$\lambda_{vmax}$
$\lambda_{amax}$
$\lambda_w$

FIG.4

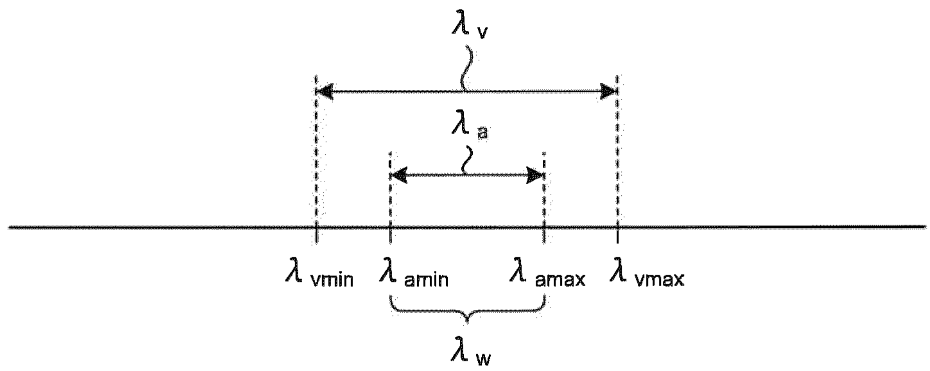
$\lambda_v$
$\lambda_a$
$\lambda_{vmin}$
$\lambda_{amin}$
$\lambda_{amax}$
$\lambda_{vmax}$
$\lambda_w$

FIG.5

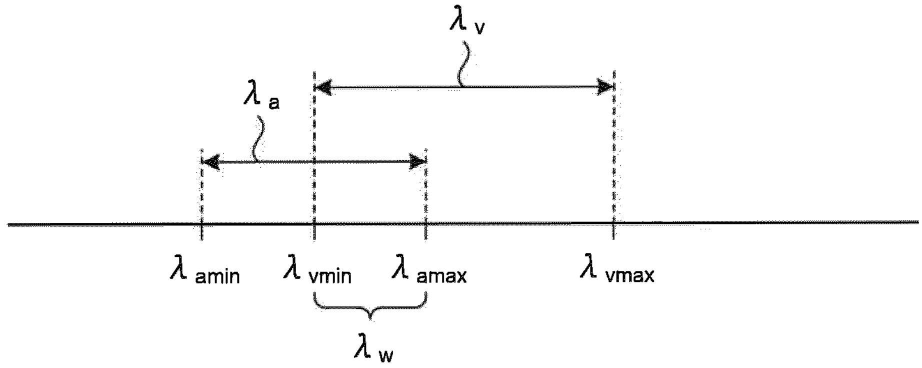
λ v
λ a
λ amin
λ vmin
λ amax
λ vmax
λ w

FIG.6

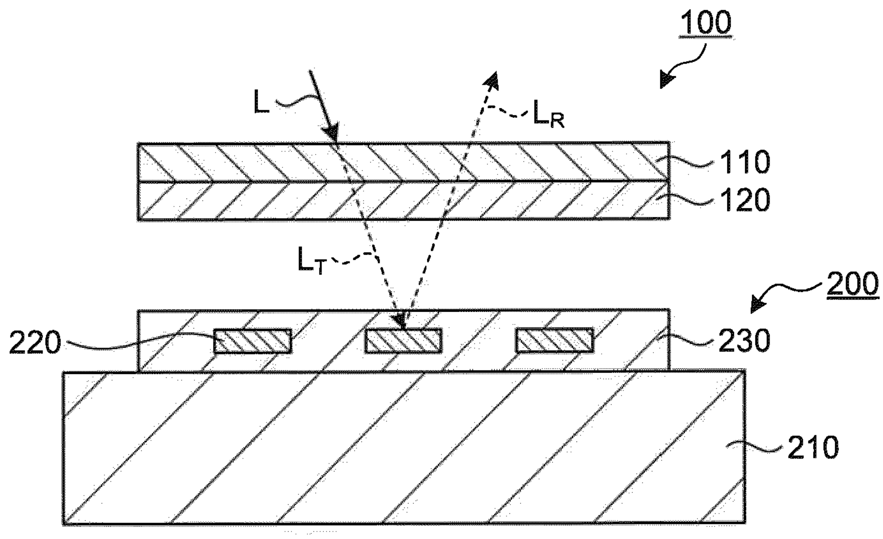
100
L
LR
110
120
LT
200
220
230
210

FIG.7

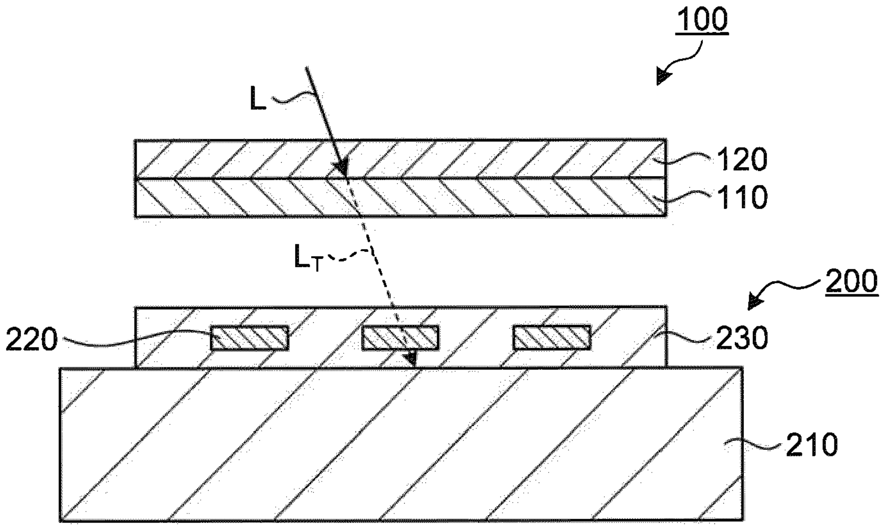
100
L
120
110
$L_T$
200
220
230
210

FIG.8

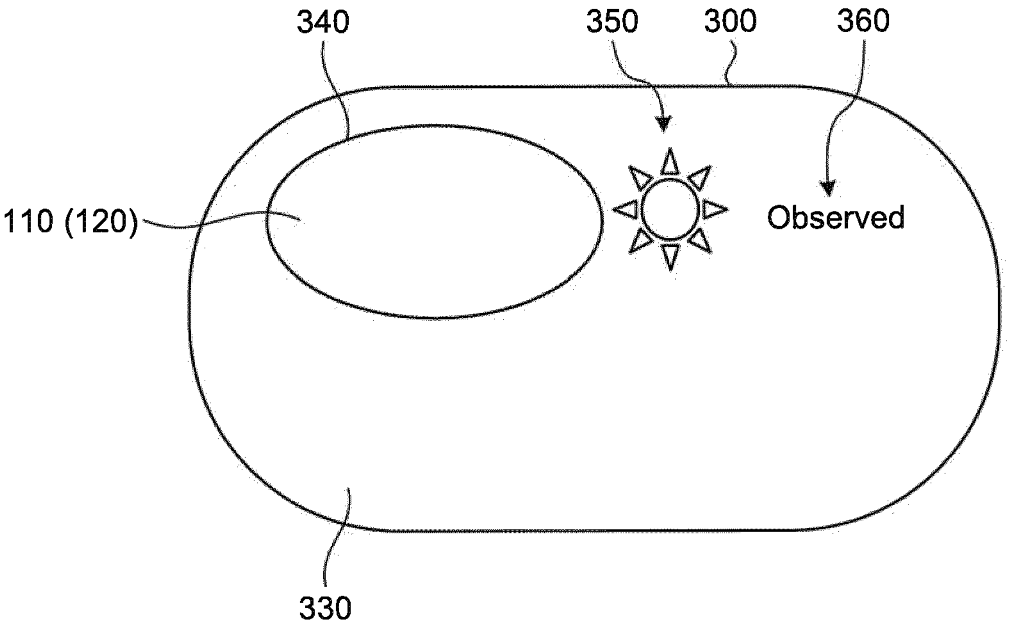
340
350
300
360
110 (120)
Observed
330

FIG.9

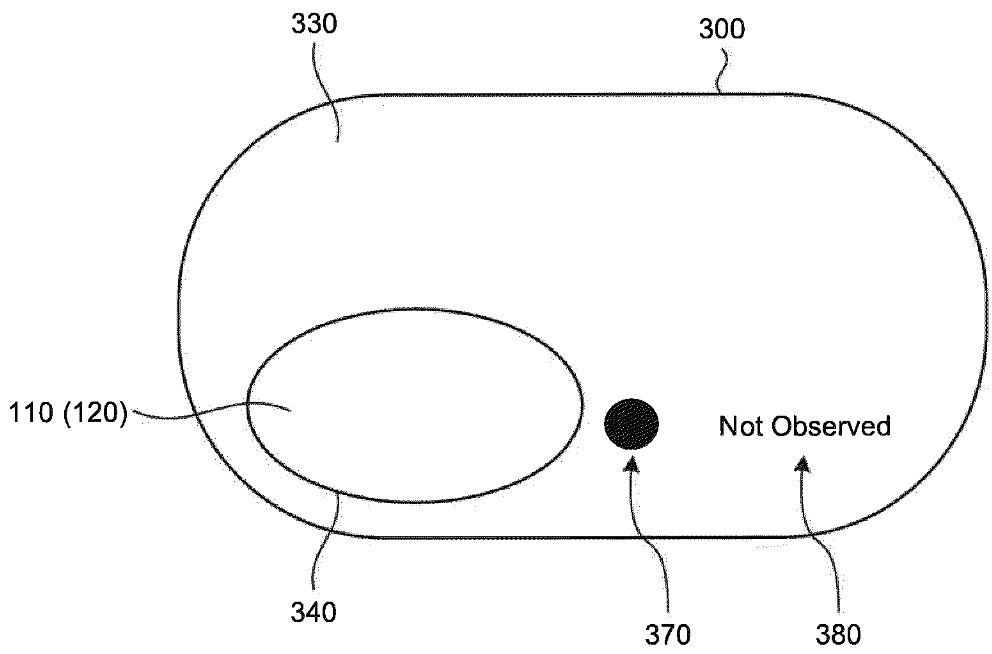
330
300
110 (120)
Not Observed
340
370
380

FIG.10

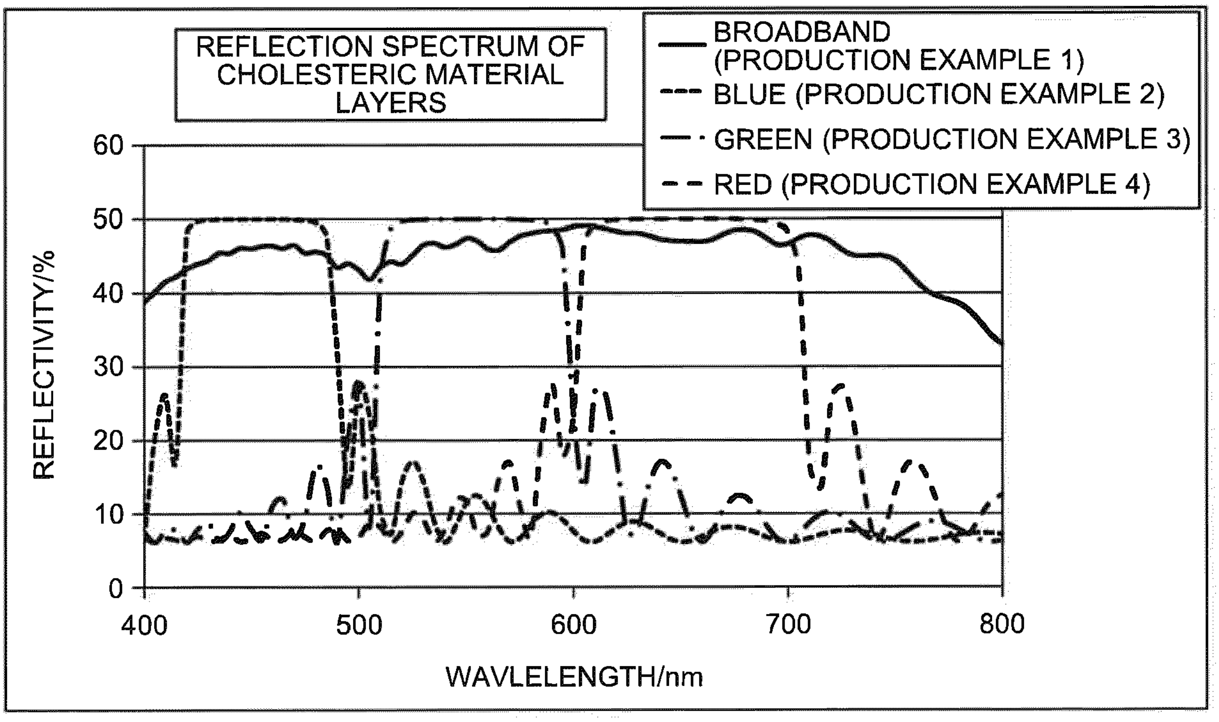
REFLECTION SPECTRUM OF CHOLESTERIC MATERIAL LAYERS
BROADBAND (PRODUCTION EXAMPLE 1)
BLUE (PRODUCTION EXAMPLE 2)
GREEN (PRODUCTION EXAMPLE 3)
RED (PRODUCTION EXAMPLE 4)
REFLECTIVITY/%
60
50
40
30
20
10
0
400
500
600
700
800
WAVLELENGTH/nm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007279129 A
- JP 2012215762 A
- JP 2016010857 A
- JP 2008129421 A
- JP 2013068868 A
- US 2013257032 A1
- JP 2008068599 A
- JP 2008203557 A
- JP 2009300662 A
- WO 2016002765 A
- JP 2014174471 A
- JP 2015027743 A
- JP 2007057971 A
- WO 2014069515 A
- WO 2015064581 A
- JP 6055569 B